# EUROPEAN PATENT APPLICATION

(11) **EP 4 794 040 A1**
(43) Date of publication of application: **19.08.2026**
(21) Application number: 24877259.2
(22) Date of filing: 11.10.2024
(51) Int. Cl.: H01M 10/052, H01M 4/13, H01M 10/0562, H01M 10/0565, H01M 10/0585

(54) **POWER STORAGE DEVICE AND METHOD FOR MANUFACTURING SAME**

(30) Priority: 11.10.2023 JP 2023175783
(71) Applicant: Niterra Co., Ltd., Nagoya-shi, Aichi 461-0005 (JP)
(72) Inventor: KATAOKA, Kazuki, Nagoya-shi, Aichi 461-0005 (JP); IGA, Yuta, Nagoya-shi, Aichi 461-0005 (JP); MIYAMOTO, Suguru, Nagoya-shi, Aichi 461-0005 (JP); HIKOSAKA, Hideaki, Nagoya-shi, Aichi 461-0005 (JP)
(74) Representative: Zimmermann & Partner Patentanwälte mbB
(86) International application number: PCT/JP2024/036368
(87) International publication number: WO 2025/079665

(57) **Abstract**

Provided are a power storage device (10) which can suppress the growth of dendrites while suppressing increases in the mass and volume of the power storage device, and a method for manufacturing the power storage device. The power storage device includes a positive electrode (11), a negative electrode (15), and a separator (14) for isolating the positive electrode and the negative electrode. The negative electrode includes an active material layer (17), an electrolyte layer (18), and a conduction layer (19), which are arranged in this order toward the positive electrode. The active material layer includes an active material which reduces carrier ions. The electrolyte layer includes an electrolytic solution and a solid electrolyte having conductivity for carrier ions, and is in contact with the active material layer. The conduction layer has electron conductivity, is in contact with the electrolyte layer, and takes in an element deposited at an interface between the active material layer and the electrolyte layer.

## Description

### TECHNICAL FIELD

The present invention relates to a power storage device which uses ions as a carrier and to a method for manufacturing the power storage device.

### BACKGROUND ART

In a power storage device which uses ions as a carrier, a metal may deposit on a negative electrode during charge. Needle-shape dendritic crystals (dendrites) are likely to be formed in the negative electrode due to the influence of a variation in electric field distribution and ion concentration at the time of deposition, and dendritic growth causes lowering of charge efficiency and a failure. Non-patent Literature 1 discloses a related art technique of providing a device for pressing a unit battery (cell) in a power storage device and performing charge and discharge while pressing the cell, thereby densifying a deposited substance, and thus suppressing the growth of dendrites.

### CITATION LIST

### NON-PATENT LITERATURES

Non-patent Literature 1: Shoichi Matsuda, "Effect of Confining Pressure on the Repeated Lithium Deposition/Dissolution Reaction," the Proceedings of the 62nd Battery Symposium in Japan, the Battery Technology Committee of the Electrochemical Society of Japan, November 30, 2021

### SUMMARY OF INVENTION

### TECHNICAL PROBLEM

The related art technique has a problem that, since the mass and volume of the power storage device increase by amounts corresponding to the mass and volume of the device for pressing the cell, the actual energy density of the power storage device becomes significantly lower than a theoretical energy density determined by an active material contained in the power storage device.

The present invention has been made in order to solve such a problem, and an object of the present invention is to provide a power storage device in which dendritic growth can be suppressed, while suppressing an increase in the mass and volume of the power storage device and provide a method for manufacturing the power storage device.

### SOLUTION TO PROBLEM

A first mode for achieving this object is a power storage device which includes a positive electrode, a negative electrode, and a separator for isolating the positive electrode and the negative electrode from each other and which utilizes ion conduction. The negative electrode includes an active material layer, an electrolyte layer, and a conduction layer, which are arranged in this order toward the positive electrode, the active material layer including an active material which causes an oxidation-reduction reaction, the electrolyte layer including an electrolytic solution and a solid electrolyte having conductivity for carrier ions and being in contact with the active material layer, the conduction layer having electron conductivity, being in contact with the electrolyte layer, and taking in an element deposited at an interface between the active material layer and the electrolyte layer.

A second mode is the power storage device of the first mode in which the conduction layer includes a metal layer which produces an alloy with an element produced as a result of a reaction of the carrier ions.

A third mode is the power storage device of the first mode in which the conduction layer includes a capturing body having electron conductivity and adsorbing molecules, and the molecules contain an element produced as a result of a reaction of the carrier ions.

A fourth mode is the power storage device of the third mode in which the molecules adsorbed by the capturing body have a first phase and a second phase which is closer to the capturing body than the first phase, and the ratio of the elements which easily become ions during discharge to the elements contained in the second phase in a fully charged state is larger than the ratio of the elements which easily become ions during discharge to the elements contained in the first phase in the fully charged state.

A fifth mode is the power storage device of any one of the first to fourth modes, in which the carrier ions are lithium ions, and the solid electrolyte is an oxide having a garnet-type crystal structure containing Li, La, and Zr.

A sixth mode is a method for manufacturing a power storage device which includes a positive electrode, a negative electrode, and a separator for isolating the positive electrode and the negative electrode from each other and which utilizes ion conduction, in which the negative electrode includes an active material layer including an active material which causes an oxidation-reduction reaction, an electrolyte layer including an electrolytic solution and a solid electrolyte having conductivity for carrier ions and being in contact with the active material layer, and a conduction layer having electron conductivity, being in contact with the electrolyte layer, and taking in the carrier ions. The method includes a step of stacking the positive electrode, the separator, and the negative electrode in this order; and a step of causing a current to flow from the negative electrode to the positive electrode so as to deposit an element contained in the electrolyte layer at an interface between the active material layer and the electrolyte layer.

### ADVANTAGEOUS EFFECTS OF INVENTION

According to the method for manufacturing a power storage device of the present invention, when a current is caused to flow from the negative electrode to the positive electrode, an element contained in the electrolyte layer deposits at the interface between the electrolyte layer and the active material layer. When dendrites grow in the electrolyte layer toward the positive electrode, the element is also deposited at the interface of the electrolyte layer having acquired electron conductivity because of the dendrites. Since the electron conductivity of the electrolyte layer is lower than the electron conductivity of the active material layer, the reaction at the interface of the electrolyte layer is limited by electron conduction. Therefore, the difference between the carrier ion concentration at the interface of the electrolyte layer and the carrier ion concentration in the separator becomes smaller than the difference between the carrier ion concentration at the interface of the negative electrode and the carrier ion concentration in the separator in the case where the electrolyte layer is not present. Therefore, the reaction at the interface of the electrolyte layer occurs approximately uniformly over the entire interface of the electrolyte layer, as compared with the reaction at the interface of the negative electrode in the case where the electrolyte layer is not present. Furthermore, since the conduction layer having electron conductivity is in contact with the electrolyte layer, the element also deposits on the conduction layer. The deposited element is taken in the conduction layer.

Since the power storage device of the present invention has the conduction layer and the electrolyte layer, a reaction in which an element deposits during charge occurs approximately uniformly over the entire interface of the conduction layer, as compared with the reaction at the interface of the negative electrode in the case where the conduction layer and the electrolyte layer are not present in the power storage device. Although the element is also deposited inside the conduction layer, since the deposited element is taken in the conduction layer and thus the element filling rate in the conduction layer increases, the growth of dendrites can be suppressed. Since it is not necessary to perform charge and discharge while pressing the cell so as to suppress the growth of dendrites, it is possible to suppress the growth of dendrites while suppressing increases in the mass and volume of the power storage device.

### BRIEF DESCRIPTION OF DRAWINGS

FIG. 1 is a cross-sectional view of a power storage device in one embodiment.
FIG. 2 is a view schematically showing a garnet-type crystal structure.
FIG. 3 is a schematic view of a conduction layer.

### DESCRIPTION OF EMBODIMENTS

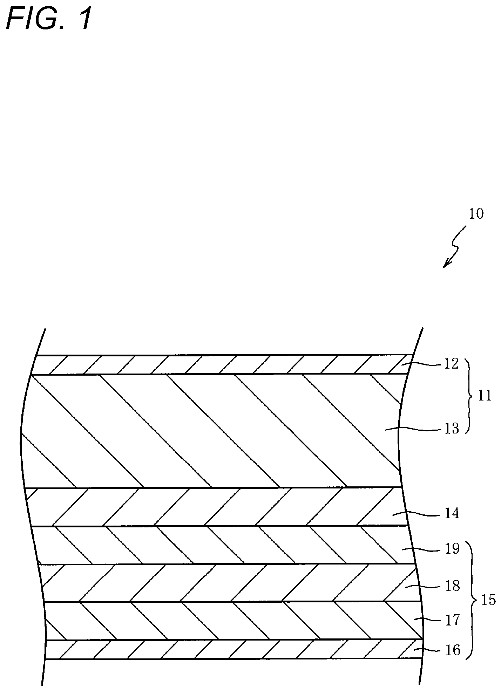

Hereinafter, a preferred embodiment of the present invention will be described with reference to attached drawings. FIG. 1 is a schematic cross-sectional view of a power storage device 10 in one embodiment. The power storage device 10 uses an ion as a carrier. Examples of the ion serving as a carrier include metal ions such as Li⁺, Na⁺, K⁺, Mg²⁺, Cu⁺, and Ag⁺, and anions such as OH⁻, F⁻, and H⁻. However, no limitation is imposed on the type of ions.

Examples of the power storage device 10 include ion batteries (e.g., a lithium ion battery) in which ions such as Li⁺, Na⁺, K⁺, Mg²⁺, F⁻, or H⁻ are used as a carrier, an electrochemical capacitor which employs redox reaction of electrodes, redox reaction of ions in an electrolytic solution, or an electric double layer, and a metal air battery in which oxygen in the air is used as a positive electrode active material and a metal such as Li, Zn, Al, Mg, or Fe is used as a negative electrode active material. The power storage device 10 includes a positive electrode 11, a separator 14, and a negative electrode 15 arranged in this order.

No limitation is imposed on the separator 14, so long as the separator 14 isolates the positive electrode 11 and the negative electrode 15 from each other. Examples of the separator 14 include (1) a separator in which an electrically insulating porous body is disposed and carrier ions contained in an electrolytic solution move through the porous body, (2) a separator in which a solid electrolyte having ion conductivity is disposed in place of the porous body and the electrolytic solution, and (3) a separator in which a gel electrolyte having ion conductivity is disposed or a separator in which a mixture of an electrolytic solution and a solid electrolyte having ion conductivity is disposed. In the case where the separator 14 is the separator of (1), the power storage device 10 is a so-called liquid metal ion battery, a metal air battery, or an electrochemical capacitor. In the case where the separator 14 is the separator of (2), the power storage device 10 is a so-called all-solid-state battery. In the case where the separator 14 is the separator of (3), the power storage device 10 is a so-called semi-solid-state battery.

The positive electrode 11 includes a current collector 12 and a reaction layer 13 stacked together. The current collector 12 is a member having electrical conductivity. Examples of the material of the current collector 12 include metals selected from among Ni, Ti, Fe, and Al; alloys each containing two or more of such elements; stainless steel; and carbon material.

In the case where the power storage device 10 is an ion battery or an electrochemical capacitor, the reaction layer 13 contains a positive electrode active material. The positive electrode active material is appropriately selected in accordance with the type of carrier ions.

In the case where the power storage device 10 is a metal air battery, in order to use oxygen in the atmosphere as a positive electrode active material, the reaction layer 13 includes a gas diffusion layer in which air diffuses, and a catalyst layer where a reducing reaction of oxygen occurs. The catalyst layer includes a catalyst for decomposition, such as manganese oxide and porphyrin-based compound which enhance the capacity of decomposing hydrogen peroxide ions.

The negative electrode 15 includes an active material layer 17, an electrolyte layer 18, and a conduction layer 19 arranged in this order toward the positive electrode 11. A current collector 16 having electrical conductivity may be provided in the active material layer 17. Examples of the material of the current collector 16 include metals selected from among Ni, Ti, Fe, Cu, and Si; alloys each containing two or more of such elements; stainless steel; and carbon material.

The active material layer 17 contains an active material (negative electrode active material). No limitation is imposed on the material of the active material, so long as the active material can occlude and release carrier ions. The active material is appropriately selected in accordance with the type of carrier ions.

In the case where the power storage device 10 is an electrochemical capacitor or an ion battery in which metal ions are used as carrier ions, examples of the active material include carbonaceous materials (such as porous carbon, natural carbon, artificial carbon, easy-to-graphitize carbon (hard carbon), hard-to-graphitize carbon (soft carbon), and carbon fiber), Li₄Ti₅O₁₂, Si, Si-Li alloy, a compound containing Si and O as constituent elements (hereinafter referred to as "SiOx," wherein 0.5≤X≤1.5), metallic lithium, lithium alloys (such as Li-Al alloy, Li-Sn alloy, Li-Si alloy, Li-Mg alloy, and Li-Si alloy), In-Sb alloy, and Si-Li alloy. Examples of the SiOx include Si oxide and a structure of microcrystalline or amorphous Si dispersed in amorphous SiO₂ matrix. In the case where the power storage device 10 is a metal air battery, examples of the active material include metals such as Li, Zn, Al, Mg, and Fe. One, two, or more types of these materials are selected for the active material.

Examples of the active material layer 17 include an aggregate of particles formed of any of these materials, a plate formed of any of these materials, and a porous body on which any of these materials is supported. Among them, metallic lithium and alloy-based active materials which are higher in capacity density than carbon-based active materials are preferred. In the case where the active material layer 17 is an aggregate of particles, in order to reduce the resistance of the active material layer 17, the active material layer 17 may contain a conducting aid. Examples of the conducting aid include carbon black, acetylene black, Ketjen black, carbon fiber, Ni, Pt, and Ag.

The electrolyte layer 18 includes an electrolytic solution and a solid electrolyte having lithium ion conductivity. The solid electrolyte includes one or more members selected from among a sulfide-based solid electrolyte, an oxide-based solid electrolyte, a hydride-based solid electrolyte, a halide-based solid electrolyte, and an organic solid electrolyte. Examples of the sulfide-based solid electrolyte include a crystalline thio-LISICON type, a Li₁₀GeP₂S₁₂ type, an argyrodite type, an Li₇P₃S₁₁ type, and a glass- or glass ceramic-type typically Li₂S-P₂S₅.

Examples of the oxide-based solid electrolyte include an oxide having a NASICON-type structure, an oxide having a perovskite structure, and an oxide having a garnet-type structure. Examples of the oxide having a NASICON-type structure include an oxide containing at least Li, M (M represents one or more elements selected from Ti, Zr, and Ge), and P (e.g., Li(Al,Ti)₂(PO₄)₃ and Li(Al,Ge)₂(PO₄)₃). Examples of the oxide having a perovskite structure include an oxide containing at least Li, Ti, and La (e.g., La_{2/3-X}Li_{3X}TiO₃).

Examples of the hydride-based solid electrolyte include a solid solution of LiBH₄ with a lithium halide compound (LiI, LiBr, or LiCl) or lithium amide (LiNH₂). Examples of the halide-based solid electrolyte include Li₃YCl₆. Examples of the organic solid electrolyte include polyethylene oxide, polypropylene oxide, and polyacrylonitrile.

The solid electrolyte is preferably a complex oxide having a garnet-type crystal structure containing Li, La, and Zr, because the complex oxide has an ion conductivity on the order of 10⁻³ S/cm and has a reducing resistance against metallic lithium. The garnet-type crystal structure is represented by a general formula C₃A₂B₃O₁₂.

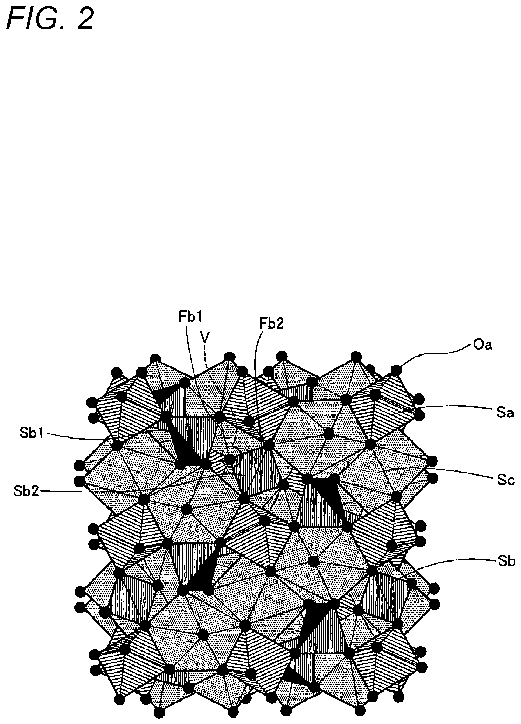

FIG. 2 is a view schematically showing a garnet-type crystal structure. In the garnet-type crystal structure, a C site (Sc) coordinates with an oxygen atom (Oa) in a dodecahedral manner; an A site (Sa) with an oxygen atom (Oa) in an octahedral manner; and a B site (Sb) with an oxygen atom (Oa) in a tetrahedral manner. The solid electrolyte 19 generally has a garnet-type crystal structure, but Li may be present in a site (i.e., vacancy V), which is a site realizing octahedral coordination with an oxygen atom (Oa). The vacancy V is present at a site disposed, for example, between a B site (Sb1) and a B site (Sb2). The Li present in vacancy V coordinates, in an octahedral manner, with oxygen atoms (Oa) forming an octahedral structure which includes tetrahedral faces Fb1 and Fb2, wherein Fb1 forms the B site (Sb1), and Fb2 forms the B site (Sb2). In one possible case, in Li₇La₃Zr₂O₁₂ having a garnet-type crystal structure, La is present in the C sites (Sc); Zr in the A sites (Sa), and Li in the B sites (Sb) and the vacancy (V).

The garnet-type crystal structure can be identified by X-ray diffraction. The garnet-type crystal structure exhibits an XRD pattern similar to that of an X-ray diffraction file No. 422259 (Li₇La₃Zr₂O₁₂) of CSD (Cambridge Structural Database). As compared with No. 422259, the solid electrolyte may have differences in the type of constituting elements, the Li concentration, and the like. Therefore, diffraction angle and intensity ratio may vary. A typical crystal structure of this type is a cubic system (space group: Ia-3d ("-" is an over-line representing rotary inversion), JCPDS:84-1753).

A typical example of the solid electrolyte having a garnet-type crystal structure is Li₇La₃Zr₂O₁₂. In the solid electrolyte, a part of the elements forming Li₇La₃Zr₂O₁₂ may be substituted by another element, or a small amount of additional element may be added thereto without substituting the original elements. Examples of the additional element include at least one element selected from the group consisting of Mg, Al, Si, Ca, Ti, V, Ga, Sr, Y, Nb, Sn, Sb, Ba, Hf, Ta, W, Bi, Rb, and lanthanoids (except for La).

Examples of the solid electrolyte include Li₆La₃Zr_{1.5}W_{0.5}O₁₂, Li_{6.15}La₃Zr_{1.75}Ta_{0.25}Al_{0.2}O₁₂, Li₆.₁₅La₃Zr_{1.75}Ta_{0.25}Ga_{0.2}O₁₂, Li_{6.25}La₃Zr₂Ga_{0.25}O₁₂, Li_{6.4}La₃Zr_{1.4}Ta_{0.6}O₁₂, Li_{6.5}La₃Zr_{1.75}Te_{0.25}O₁₂, Li_{6.75}La₃Zr_{1.75}Nb_{0.25}O₁₂, Li_{6.9}La₃Zr_{1.675}Ta_{0.289}Bi_{0.036}O₁₂, Li_{6.46}Ga_{0.23}La₃Zr_{1.85}Y_{0.15}O₁₂, Li_{6.8}La_{2.95}Ca_{0.05}Zr_{1.75}Nb_{0.25}O₁₂, Li_{7.05}La_{3.00}Zr_{1.95}Gd_{0.05}O₁₂, and Li_{6.20}Ba_{0.30}La_{2.95}Rb_{0.05}Zr₂O₁₂.

The solid electrolyte preferably contains at least one of Mg and element A (A represents at least one element selected from the group consisting of Ca, Sr, and Ba), and satisfies all the following conditions (1) to (3) regarding mole proportions of the elements. Alternatively, the solid electrolyte preferably contains both Mg and element A, and satisfies all the following conditions (4) to (6) regarding mole proportions of the elements. From the viewpoint of elevating ion conductivity of the solid electrolyte, element A is preferably Sr. This is because, when the constituent elements of Li₇La₃Zr₂O₁₂ are partially substituted by Mg and Sr, the ion conductivity of the solid electrolyte increases, and metallic lithium deposits more densely.$1.33 \leq Li / \left(La+A\right) \leq 3$ $0 \leq Mg / \left(La+A\right) \leq 0.5$ $0 \leq A / \left(La+A\right) \leq 0.67$ $2.0 \leq Li / \left(La+A\right) \leq 2.5$ $0.01 \leq Mg / \left(La+A\right) \leq 0.14$ $0.04 \leq A / \left(La+A\right) \leq 0.17$

Referring back to FIG. 1, description will be continued. The electrolytic solution contained in the electrolyte layer 18 is a medium through which carrier ions move, and is a solution of a metal salt dissolved in a solvent. No particular limitation is imposed on the solvent, so long as the solvent can dissolve the metal salt. An aqueous solvent or a non-aqueous solvent is used without limitation. Examples of the non-aqueous solvent include a carbonate ester, an aliphatic carboxylate ester, a phosphate ester, a γ-lactone, an ether, a nitrile, a sulfolane, dimethyl sulfoxide, a fluorous solvent, and an ionic liquid. A mixture thereof may also be employed.

Examples of the carbonate ester include cyclic carbonate esters such as propylene carbonate, ethylene carbonate, butylene carbonate, vinylene carbonate, vinylethylene carbonate, and fluoroethylene carbonate; and chain carbonate esters such as dimethyl carbonate, diethyl carbonate, and ethyl methyl carbonate.

Examples of the aliphatic carboxylate ester include methyl formate, methyl acetate, and ethyl propionate. Examples of the phosphate ester include trimethyl phosphate. Examples of the γ-lactone include γ-butyrolactone. Examples of the ether include chain ethers such as 1,2-dialkoxyethane; and cyclic ethers such as 1,3-dioxolane, tetrahydrofuran, and 2-methyltetrahydrofuran. Examples of the nitrile include acetonitrile and propionitrile. The fluorous solvent encompasses a compound derived from a hydrocarbon by substituting a hydrogen atom by a fluorine atom, and a derivative of the compound.

An ionic liquid is a compound formed of a cation and an anion and assumes liquid at ambient temperature and normal pressure. When the solvent of the electrolytic solution is an ionic liquid, inflammability of the electrolytic solution can be enhanced. The ionic liquid is preferred because its potential window is relatively wide. Preferably, the ionic liquid contains one or more cation species selected from the group consisting of ammonium, imidazolium, pyrrolidinium, and piperidinium.

No particular limitation is imposed on the anion moiety of the ionic liquid. Examples of the anion moiety include inorganic anions such as BF₄⁻ and N(SO₂F)₂⁻; and organic anions such as B(C₆H₅)₄⁻, CH₃SO₃⁻, CF₃SO₃⁻, N(SO₂CF₃)₂⁻, and N(SO₂C₄F₉)₂⁻. In some cases, N(SO₂F)₂- may be abbreviated as [FSI]⁻) (i.e., bis(fluorosulfonyl)imide anion) and N(SO₂CF₃)₂- may be abbreviated as [TFSI]⁻ (i.e., bis(trifluoromethanesulfonyl)imide anion).

Examples of the ionic liquid include N,N-diethyl-N-methyl-N-(2-methoxyethyl)ammonium bis(fluorosulfonyl)imide (DEME-FSI), N,N-diethyl-N-methyl-N-(2-methoxyethyl)ammonium bis(trifluoromethanesulfonyl)imide (DEME-TFSI), 1-ethyl-3-methylimidazolium bis(fluorosulfonyl)imide (EMI-FSI), 1-ethyl-3-methylimidazolium bis(trifluoromethanesulfonyl)imide (EMI-TFSI), N-butyl-N-methylpiperidinium bis(fluorosulfonyl)imide, N-methyl-N-propylpiperidinium bis(trifluoromethanesulfonyl)imide, N-methyl-N-propylpyrrolidinium bis(fluorosulfonyl)imide (P13-FSI), and N-methyl-N-propylpyrrolidinium bis(trifluoromethanesulfonyl)imide (P13-TFSI). A mixture thereof may also be employed.

The ionic liquid may be a solvated ionic liquid. Examples of the solvated ionic liquid include a solution prepared by dissolving a metal salt in a sulfone-type solvent (e.g., sulfolane or a sulfolane derivative) or a glyme-type solvent (e.g., tetraglyme).

Examples of the anion moiety of the metal salt include OH⁻, halide ions (e.g., I⁻ ,Cl⁻, and Br⁻), ,SCN⁻, BF₄⁻, BF₃(CF₃)⁻, BF₃(C₂F₅)⁻, PF₆⁻, ClO₄⁻, SbF₆^{-,} N(SO₂F)₂⁻, N(SO₂CF₃)₂⁻, N(SO₂C₂F₅)₂⁻, B(C₆H₅)₄⁻, B(O₂C₂H₄)₂⁻, C(SO₂F)₃⁻, C(SO₂CF₃)₃⁻, CF₃COO⁻, CF₃SO₂O⁻, C₆F₅SO₂O⁻, B(O₂C₂O₂)₂⁻, and RCOO⁻ (R represents a C1 to C4 alkyl group, a phenyl group, or a naphthyl group). The metal salt may also be a mixture of these salts.

The metal salt concentration of the electrolytic solution is 0.2 mol/dm³ or higher, preferably 0.5 mol/dm³ or higher. Since, as the salt concentration increases, the number of solvent molecules coordinated at carrier ions increases and thus the number of uncoordinated solvent molecules decreases, whereby the interfacial resistance of the solid electrolyte can be reduced. The salt concentration of the electrolytic solution is preferably 4.0 mol/dm³ or lower, because, when the salt concentration of the electrolytic solution is higher than 4.0 mol/dm³, the tendency that the ion conductivity decreases due to an increase in the viscosity of the electrolytic solution becomes remarkable.

The electrolyte layer 18 has a ratio of the volume of the solid electrolyte to the sum of the volume of the solid electrolyte and the volume of the electrolytic solution of 52% or more and less than 100%, preferably 61% or more and less than 100%. By virtue of the combination of the solid electrolyte with the electrolytic solution, the interfacial resistance of the solid electrolyte can be reduced, whereby a transport number of ions of the electrolyte layer 18 can be larger than that of the transport number of the customary employed electrolytic solution. As a result, the stability of the power storage device 10 is improved.

The solid electrolyte content (vol.%) is determined by the following procedure. By means of a scanning electron microscope (SEM) equipped with an energy-dispersive X-ray spectrometer (EDS), a 5,000x field of view randomly selected from a cross section of the electrolyte layer 18 is subjected to element analysis to identify distribution of elements, or image analysis of the contrast in a reflected electron image. As a result, the areas of the solid electrolyte and the electrolytic solution are determined. The solid electrolyte content (vol.%) is obtained by considering, as the ratio of volume, the ratio of the area of the solid electrolyte to the sum of the area of the solid electrolyte and the area of the electrolytic solution.

The cross section of the electrolyte layer 18 used for analysis is a polished surface, a surface obtained as a result of irradiation of a focused ion beam (FIB), or a surface obtained by ion milling. The polished surface is obtained by, for example, freezing the electrolyte layer 18 or embedding the electrolyte layer 18 in a tetrafunctional epoxy resin or the like, which is then solidified, and polishing the frozen or embedded electrolyte layer 18.

The electrolyte layer 18 may contain a binder for binding the solid electrolyte. Examples of the binder include a fluororesin, polyolefin, polyvinylpyrrolidone, poly(vinyl alcohol), cellulose ether, and rubber polymer such as styrene-butadiene rubber. Examples of the fluororesin include vinylidene fluoride-based polymer, poly(chlorotrifluoroethylene), poly(vinyl fluoride), tetrafluoroethylene-perfluoroalkyl vinyl ether copolymer, tetrafluoroethylene-hexafluoropropylene copolymer, ethylene-tetrafluoroethylene copolymer, and ethylene-chlorotrifluoroethylene copolymer.

No particular limitation is imposed on the vinylidene fluoride-based polymer, so long as it contains -CH₂CF₂-. Examples of the vinylidene fluoride-based polymer include a vinylidene fluoride homopolymer and a copolymer of vinylidene fluoride and a copolymerizable monomer. Examples of the copolymerizable monomer include a halogen-containing monomer (except for vinylidene fluoride) and a non-halogen copolymerizable monomer. Examples of the halogen-containing monomer include chlorine-containing monomers such as vinyl chloride; and fluorine-containing monomers such as trifluoroethylene, tetrafluoroethylene, chlorotrifluoroethylene, hexafluoropropylene, and perfluoroalkyl vinyl ether. Examples of the non-halogen copolymerizable monomer include olefins such as ethylene and propylene; acrylic monomers such as acrylic acid, methacrylic acid, an ester thereof, and a salt thereof; and vinyl monomers such as acrylonitrile, vinyl acetate, and styrene. One or more copolymerizable monomers are polymerized with vinylidene fluoride to form a copolymer.

The binder and the electrolytic solution may be separately present in the electrolyte layer 18, or may be mixedly present to form a gel. The electrolyte layer 18 may include a solvent for dissolving the binder. A binder whose potential window is wider than the potential window of the electrolytic solution is preferred.

For the purpose of, for example, enhancing the electrochemical stability of the electrolyte layer 18, the electrolyte layer 18 may contain a polymer. Examples of the material of the polymer include polyethylene, polypropylene, poly(ethylene terephthalate), polystyrene, polyamide, poly(vinyl alcohol), ethylene-vinyl alcohol copolymer, poly(vinylidene chloride), polyacrylonitrile, polycarbonate, and silicone. The polymer may be in any of various forms such as particles, fibers, and scales.

The conduction layer 19 is in contact with the electrolyte layer 18 and has electron conductivity. The conduction layer 19 is a layer for taking in elements deposited at the interface between the active material layer 18 and the electrolyte layer 18. The thickness of the conduction layer 19 falls within a range of, for example, 10 µm to 100 µm. The conduction layer 19 includes a metal layer for producing an alloy with an element produced as a result of, for example, a reaction of carrier ions.

For the metal layer, a material which is not corroded by the electrolytic solution is appropriately selected in accordance with the type of carrier ions. Examples of the metal layer include an aggregate of particles containing a metal which forms an alloy (hereinafter referred to as an "alloy-forming metal"), a plate or mesh formed of a material containing an alloy-forming metal, a porous body on which an alloy-forming metal is supported, and a porous body formed of an alloy-forming metal. Examples of the alloy include total solid solution alloy, eutectic alloy, hypoeutectic alloy, hypereutectic alloy, and peritectic alloy.

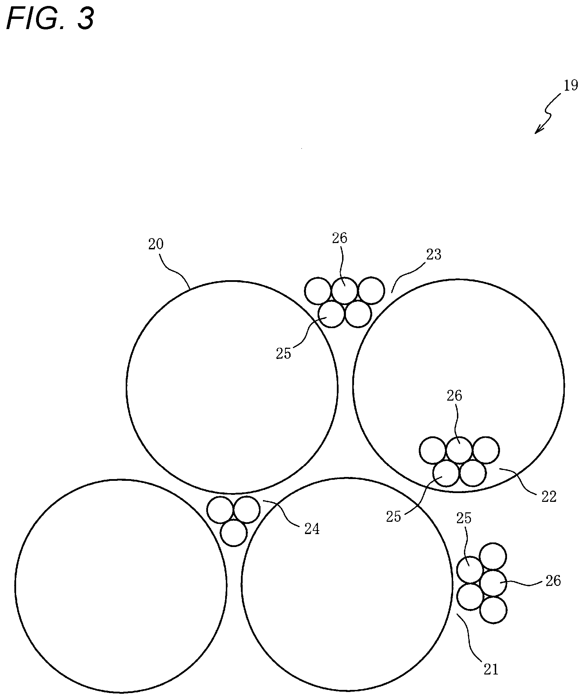

FIG. 3 is a schematic view of the conduction layer 19. The conduction layer 19 includes, for example, a capturing body 20 which has electron conductivity and adsorbs molecules. The molecules contain elements produced as a result of a reaction of carrier ions. The molecules may contain one or more species of elements among the elements which constitute the electrolyte layer 19. A substance having molecule adsorbing sites is used as the capturing body 20 without limitation. The mechanism of adsorption of the capturing body 20 may be chemical adsorption or physical adsorption.

A substance which is not corroded by the electrolytic solution is used as the capturing body 20. Examples of the capturing body 20 include an organic polymer porous body having electron conductivity, a porous gel such as electrically conductive tin oxide, an electrically conductive porous ceramic material such as aluminum nitride, and a carbon-based porous body. The organic polymer porous body is obtained by electrolytic polymerization or chemical redox polymerization of polyaniline, polypyrrole, polythiophene, or the like. Examples of the carbon-based porous body include nano-carbon materials (graphite, graphene, and carbon nanotube).

The schematic view of FIG. 3 shows the conduction layer 19 including the capturing body 20 formed of graphene. The capturing body 20 has adsorption sites 21, 22, 23, and 24, which are provided on a side surface of a grain of graphene, in a grain of graphene, in a valley-shaped space between adjacent grains of graphene, and in an inter-graphene grain space, respectively. Molecules produced as a result of reducing decomposition of compounds (for example, the electrolytic solution and the binder) constituting the electrolyte layer 18 are adsorbed at the adsorption sites 21, 22, 23, and 24. The molecules contain one or more species of elements among the elements which constitute the electrolyte layer 18. The molecules have a first phase 25 and a second phase 26, and the first phase 25 is closer to the capturing body 20 as compared with the second phase 26. This shows that the first phase 25 has been adsorbed by the capturing body 20 before the second phase 26.

During charge of the power storage device 10, a metal deposits mainly in the second phase 26. The metal deposited in the second phase 26 is easily converted to metal ions during discharge. Namely, the ratio of elements which are easily converted to ions during discharge to the elements contained in the second phase 26 in a fully charged state is larger than the ratio of elements which easily become ions during discharge to the elements contained in the first phase 25 in the fully charged state.

One example of a method for manufacturing the power storage device 10 will be described by using a lithium ion battery as an example. A positive electrode active material (in the present embodiment, LiNi_{0.5}Mn_{0.3}Co_{0.2}O₂), a conducting aid, and a solution containing a binder dissolved therein are mixed to produce a slurry for the active material layer 13. The slurry applied to the current collector 12 is dried, and the current collector 12 is cut into a predetermined size. The active material layer 13 is stacked on the current collector 12 to produce the positive electrode 11.

The electrolytic solution (a solution of a metal salt (in the present embodiment, LiFSI) dissolved in a solvent (in the present embodiment, ionic liquid P13FSI), a solid electrolyte, and a polymer (in the present embodiment, silicone resin) are mixed, and the resultant mixture is mixed with a solution containing a binder dissolved therein to produce a slurry for the electrolyte layer 18. The slurry applied to the active material layer 17 (in the present embodiment, lithium metal foil) bonded to the current collector 16 is dried, whereby the electrolyte layer 18 is produced. The conduction layer 19 (in the present embodiment, a sheet formed of graphene) is stacked on the electrolyte layer 18, and the resultant laminate is cut into a predetermined size, whereby the negative electrode 15 including the current collector 16, the active material layer 17, the electrolyte layer 18, and the conduction layer 19 stacked in this order is produced.

Terminals (not shown) are connected to the current collectors 12 and 16, and the positive electrode 11 and the separator 13 are soaked with the electrolytic solution. The negative electrode 15, the separator 14, and the positive electrode 11 are stacked in this order, and the resultant assembly is sealed by means of vacuum lamination such that the terminals extend to the outside, whereby the power storage device 10 is produced.

Next, current is caused to flow from the negative electrode 15 to the positive electrode 11 of the power storage device 10 so as to reduce the compounds contained in the electrolyte layer 18. For example, elements are taken in the conduction layer 19 by charging and discharging the power storage device 10. The charge and discharge of the power storage device 10 is preferably constant current-constant voltage charge and discharge (CC·CV charge-CC·CV discharge), because of the following reason. In the case of constant-current charge and discharge, a portion of the active material does not react and remains as an unreacted portion. The CC•CV charge-CC•CV discharge can reduce the unreacted portion.

The case where five charge-discharge cycles are preformed is described as an example. In each cycle, charge is performed in an atmosphere of 25°C. Specifically, constant-current charge of 0.2 C is performed until the terminal voltage reaches a charge upper limit voltage (for example, 4.3 V), and then constant-voltage charge is performed until the current value becomes 0.01 C. In the first and second cycles, constant-current discharge of 0.2 C is performed until the terminal voltage reaches 3.0 V, and then constant-voltage discharge is performed until the current value becomes 0.01 C. In the third cycle, constant-current discharge of 0.5 C is performed until the terminal voltage reaches 3.0 V, and then constant-voltage discharge is performed until the current value becomes 0.01 C. In the fourth cycle, constant-current discharge of 2 C is performed until the terminal voltage reaches 3.0 V, and then constant-voltage discharge is performed until the current value becomes 0.01 C. In the fifth cycle, constant-current discharge of 0.2 C is performed until the terminal voltage reaches 3.0 V, and then constant-voltage discharge is performed until the current value becomes 0.01 C.

When current is caused to flow from the current collector 16 of the negative electrode 15 of the power storage device 10 to the current collector 12 of the positive electrode 11, deposition of metallic lithium occurs at the interface between the electrolyte layer 18 and the active material layer 17. When dendrites of lithium grow in the electrolyte layer 18 toward the positive electrode 11, the electrolyte layer 18 having electron conductivity acquired by the dendrites is electrically connected to the conduction layer 19 having electron conductivity. whereby deposition of metallic lithium also occurs at the interface between the conduction layer 19 and the separator 14.

Since the electron conductivity of the electrolyte layer 18 including the electrolytic solution and the solid electrolyte having lithium ion conductivity is lower than the electron conductivity of the active material layer 17, the reaction at the interface between the conduction layer 19 and the separator 14 is limited by electron conduction. As a result, the difference between the lithium ion concentration at the interface between the conduction layer 19 and the separator 14 and the lithium ion concentration in the separator 14 becomes smaller than the difference between the lithium ion concentration at the interface between the active material layer 17 and the separator 14 and the lithium ion concentration in the separator 14 in the case where the electrolyte layer 18 and the conduction layer 19 are not present.

Therefore, the reaction at the interface between the conduction layer 19 and the separator 14 occurs approximately uniformly over the entire interface between the conduction layer 19 and the separator 14, as compared with the reaction at the interface between the active material layer 17 and the separator 14 in the case where the electrolyte layer 18 and the conduction layer 19 are not present. As a result, by the reduction of a compound contained in the electrolyte layer 18, a phase having a structure different from the structure of the electrolyte layer 18 is formed at the interface between the conduction layer 19 and the separator 14, and this phase is taken into the conduction layer 19.

Since the power storage device 10 has the conduction layer 19 and the electrolyte layer 18 between the separator 14 and the active material layer 17, the reaction in which metallic lithium deposits on the conduction layer 19 during charge occurs approximately uniformly over the entire interface between the separator 14 and the conduction layer 19, as compared with the reaction at the interface between the active material layer 17 and the separator 14 in the case where the electrolyte layer 18 and the conduction layer 19 are not present in the power storage device 10. Since the deposited metal is taken into the conduction layer 19, the growth of dendrites (needle-shape dendritic crystals) can be suppressed.

In addition, during charge, the metal deposits inside the conduction layer 19 and the deposited metal is taken in the conduction layer 19. Since the element filling rate in the conduction layer 19 increases, dendrites growing in the conduction layer 19 can be reduced.

Since it is not necessary to provide a device for pressing an unit battery (cell) in the power storage device and perform charge and discharge while pressing the cell so as to reduce the growth of dendrites as in the case of the related art technique, it is possible to suppress the growth of dendrites while suppressing increases in the mass and volume of the power storage device 10. Since it is possible to suppress increases in the mass and volume of the power storage device 10, the energy density of the power storage device 10 can be secured.

The present invention has been described on the basis of the embodiment. However, the present invention is not limited to the above embodiment. It can be easily inferred that various improvements and modifications are possible so long as they fall within the scope of the present invention.

In the above-described embodiment, the method for manufacturing the power storage device 10 has been described by using a lithium ion battery as an example. However, the power storage device is not limited to the lithium ion battery. Other ion batteries in which ions other than Li⁺ are used as carrier ions, electrochemical capacitors, metal air batteries, etc. can be manufactured in the same manner as in the above-described embodiment.

In the above-described embodiment, there has been described the power storage device 10 which has the positive electrode 12 in which the active material layer 13 is provided on one surface of the current collector 12, and the negative electrode 16 in which the active material layer 17 is provided on one surface of the current collector 16. However, the present invention is not necessarily limited thereto. It is of course possible to apply the elements in the embodiment to, for example, a power storage device which includes an electrode layer (so-called bipolar electrode) having the current collector 12, and the active material layer 13 and the active material layer 17 provided on the opposite surfaces of the current collector 12. By alternatingly stacking the bipolar electrode and the separator 14 and putting the stacked body into a case (not illustrated), a power storage device having a so-called bipolar structure can be obtained.

### REFERENCE SIGNS LIST

- 10: power storage device
- 11: positive electrode
- 14: separator
- 15: negative electrode
- 17: active material layer
- 18: electrolyte layer
- 19: conduction layer
- 20: capturing body
- 25: first phase
- 26: second phase

## Claims

1. A power storage device which includes a positive electrode, a negative electrode, and a separator for isolating the positive electrode and the negative electrode from each other and which utilizes ion conduction,
wherein the negative electrode includes an active material layer, an electrolyte layer, and a conduction layer, which are arranged in this order toward the positive electrode,
the active material layer including an active material which causes an oxidation-reduction reaction,
the electrolyte layer including an electrolytic solution and a solid electrolyte having conductivity for carrier ions and being in contact with the active material layer,
the conduction layer having electron conductivity, being in contact with the electrolyte layer, and taking in an element deposited at an interface between the active material layer and the electrolyte layer.

2. The power storage device according to claim 1, wherein the conduction layer includes a metal layer which produces an alloy with an element produced as a result of a reaction of the carrier ions.

3. The power storage device according to claim 1, wherein the conduction layer includes a capturing body having electron conductivity and adsorbing molecules, and the molecules contain an element produced as a result of a reaction of the carrier ions.

4. The power storage device according to claim 3, wherein the molecules adsorbed by the capturing body have a first phase and a second phase which is closer to the capturing body than the first phase, and
the ratio of the elements which easily become ions during discharge to the elements contained in the second phase in a fully charged state is larger than the ratio of the elements which easily become ions during discharge to the elements contained in the first phase in the fully charged state.

5. The power storage device according to any one of claims 1 to 4, wherein the carrier ions are lithium ions, and
the solid electrolyte is an oxide having a garnet-type crystal structure containing Li, La, and Zr.

6. A method for manufacturing a power storage device which includes a positive electrode, a negative electrode, and a separator for isolating the positive electrode and the negative electrode from each other and which utilizes ion conduction,
wherein the negative electrode includes
an active material layer including an active material which causes an oxidation-reduction reaction,
an electrolyte layer including an electrolytic solution and a solid electrolyte having conductivity for carrier ions and being in contact with the active material layer, and
a conduction layer having electron conductivity, being in contact with the electrolyte layer, and taking in the carrier ions, and
wherein the method comprises
a step of stacking the positive electrode, the separator, and the negative electrode in this order; and
a step of causing a current to flow from the negative electrode to the positive electrode so as to deposit an element contained in the electrolyte layer at an interface between the active material layer and the electrolyte layer.
